Europäisches Patentamt

European Patent Office

Office européen des brevets

(19)

(11) **EP 1 247 366 B1**

(12) **EUROPEAN PATENT SPECIFICATION**

(45) Date of publication and mention
of the grant of the patent:
**09.07.2003 Bulletin 2003/28**

(21) Application number: **00992080.2**

(22) Date of filing: **21.12.2000**

(51) Int Cl.[7]: **H04J 1/00**

(86) International application number:
**PCT/EP00/13124**

(87) International publication number:
**WO 01/047157 (28.06.2001 Gazette 2001/26)**

(54) **METHOD FOR INTERLEAVING A BIT FLOW IN A MOBILE TELEPHONE SYSTEM**

BITSTROMVERSCHACHTELUNGSVERFAHREN IN EINEM MOBILTELEFONSYSTEM

PROCEDE D'ENTRELACEMENT D'UN FLUX BINAIRE DANS UN SYSTEME TELEPHONIQUE MOBILE

(84) Designated Contracting States:
**AT BE CH CY DE DK ES FI FR GB GR IE IT LI LU MC NL PT SE TR**

(30) Priority: **23.12.1999 IT MI992698**

(43) Date of publication of application:
**09.10.2002 Bulletin 2002/41**

(73) Proprietor: **Siemens Mobile Communications S.p.A.**
**20126 Milano (IT)**

(72) Inventor: **DURASTANTE, Gianluca**
**I-20016 Pero (IT)**

(74) Representative: **Giustini, Delio**
**Siemens Mobile Communications S.p.A,**
**Palazzo Gorky**
**Via Monfalcone, 1**
**20092 Cinisello Balsamo (IT)**

(56) References cited:
**EP-A- 0 748 058        EP-A- 0 965 911**

• **PATENT ABSTRACTS OF JAPAN vol. 1998, no. 09, 31 July 1998 (1998-07-31) & JP 10 107865 A (JISEDAI DIGITAL TELEVISION HOSO SYST KENKYUSHO:KK;TOSHIBA CORP), 24 April 1998 (1998-04-24)**
• **YI C ET AL: "INTERLEAVING AND DECODING SCHEME FOR A PRODUCT CODE FOR A MOBILE DATA COMMUNICATION" IEEE TRANSACTIONS ON COMMUNICATIONS,US,IEEE INC. NEW YORK, vol. 45, no. 2, 1 February 1997 (1997-02-01), pages 144-147, XP000694661 ISSN: 0090-6778**

**Description**

Field of the Invention

The present invention relates to a method for interleaving a bit flow corresponding to the content of a voice or data communication in digital format between two units of a mobile telephone system.

Background art

From the document "Digital cellular telecommunications system (Phase 2+); Channel coding (GSM 05.03 version 6.2.1 Release 1997)" issued by the European Telecommunication Standardization Institute (ETSI) a standard method is known for interleaving a bit flow corresponding to a voice communication in the GSM mobile telephone system.

This known method consists in interleaving a bit flow, which is subdivided into bit blocks, in their turn diagonally subdivided into bit sub-blocks according to the formula:

$$i(B,j) = c(n,k),$$

where
    $k = 0,1,...,Bs-1$;
    $n = 0.1,...,N,N+1,...$;
    $B = B_0 + (M/2) * n + (k \bmod M)$;
    $j = 2 * (X \bmod (Bs/M)) + ((k \bmod M) \operatorname{div} (M/2))$;
    $c(n,k)$ is the n-th block of the bit flow;
    $i(B,j)$ is the B-th sub-block of interlaced bits;
    $B_0$ is the first sub-block containing the bits coming from block $c(0,j)$, that is the first block of the transmitted bits flow and
    X is a factor which can be rewritten as $(a * k)$, where a, is a constant, in particular equal to 49.

Moreover, in the GSM standard, for TCH/FS and TCH/EFS channels dedicated to the voice traffic, each one of the bit blocks $c(n,k)$ includes Bs = 456 bits and is subdivided into M = 8 sub-blocks $i(B,j)$. In this known interleaving method, the bits placed close each other in a generic block $c(n,k)$ are sufficiently far in the flow of data transmitted in such a way that the negative effects of fading peaks affect bits being rather far in the original data flow. In this way, the task of the decoder of the receiving unit is simplified, with a consequent improvement of the quality of the received digital signal.

However, the known method described in the above mentioned ETSI specification, cannot be immediately extended to a generic dimension of the bit block in input to the interleaving unit with consequent limitation of its use in any mobile telephone system. This drawback is due to the fact that if we consider any two bits having index k1 and k2 inside the block $c(n,k)$, with $k1 \neq k2$, the use of the known method does not assure the insertion of these two bits in different positions in a same sub-block $i(B,j)$. In fact, the interleaving unit inserts these two bits in sub-blocks:

$$B1 = B_0 + (M/2) * n + (k1 \bmod M),$$

for $k = k1$; and

$$B2 = B_0 + (M/2)*n + (k2 \bmod M),$$

for $k = k2$. If $B1 = B2 = B$, it results:

$$k1 \bmod M = k2 \bmod M;$$

and

$$k1 - k2 = n1*M,$$

for n1 = 0, 1,...,(Bs/M)-1.

So, the (necessary) condition for the insertion of these two bits in different positions (j1 ≠ j2) becomes :

$$2 * ((49 * k1) \bmod (Bs/M)) + ((k1 \bmod M)) \operatorname{div} (M/2)) \neq 2 * ((49 * k2) \bmod$$

$$(Bs/M)) + ((k2 \bmod M) \operatorname{div} (M/2)),$$

and therefore:

$$49 * (k1 - k2) \neq n2 * (Bs/M),$$

for n2 ∈ Z;
that is:

$$(49 * M * n1)/(Bs/M) \notin Z,$$

for n1 = 0, 1,..., (Bs/M-1)

As k1 and k2 vary, the parameter n1 takes all the integer values lower than Bs/M so that said known alternation method can be applied only if the value of Bs/M is not divisible by the factors 7 and 2 (M is an even number). Even if the value of the constant a, is simply modified with a number different from 49, the known method is still not applicable corresponding to even values of Bs/M.

Object of the Invention

Object of the present invention is therefore to supply an interleaving method without these drawbacks, that is, a method whose use could be extended to all the mobile telephone systems. This is attained through a method whose main characteristics are specified in the main claim and other characteristics are specified in the appended claims.

Thanks to the introduction of two appropriate parameters α and β, the interleaving method according to the present invention can be adapted to any dimension of the data block in input to the interleaving unit, to a generic value of the interleaving depth, offering at the same time the possibility to control the distance among the bits in the bit flow at the output of the interleaving unit.

This method can therefore be used in a completely general context and results applicable not only to systems characterized by a continuous transmission, such as for instance the FDD-UTRA system or other systems having frequency division duplex access, but also to systems characterized by a discontinuous transmission in which each user transmits in a well defined time slot inside a hierarchical structure of higher level (frame), which periodically repeats in time. Examples of these last systems are the systems with frequency division duplex access, like the GSM system, or systems with time division duplex access, like DECT and TDD-UTRA systems. This method can also be used both in presence of channels supporting a traffic of the voice type and in presence of channels supporting a data traffic.

Brief description of the figures

The method according to the present invention, together with further characteristics and advantages, may be understood by those skilled in the art with reference to the following detailed description, taken in conjunction with the accompanying drawings, in which:

- figure 1 shows a diagram of the subdivision into blocks and sub-blocks of bits on the basis of the method according said description;
- figures 2 to 6 and 8 show six diagrams indicating the calculation of the distances in terms of number of positions among the bits of the sub-blocks ; and
- figures 7 and 9 show two diagrams representing the distances among the bits of sub-blocks .

Detailed description of the Invention

The restriction described above concerning the known method is overcome operating as follows: the rule of bit positioning according to the known method can be re-written in a different way, using the identity

$$k = M * (k \text{ div } M) + k \bmod M,$$

so that

$$j = 2 * [(49*M*(k \text{ div } M) + 49*(k \bmod M)) \bmod (Bs/M)] + ((k \bmod M) \text{ div}$$

$$(M/2)).$$

The above mentioned restriction is tied to the presence of the factors 49 and M in the first term of the expression of j just rewritten. Therefore, introducing two parameters $\alpha$ and $\beta$ and considering a modified expression of j as

$$j = 2 * [(\alpha*(k \text{ div } M) - \beta*(k \bmod M)) \bmod (Bs/M)] + ((k \bmod M) \text{ div } (M/2)),$$

the only remaining restriction is that it results

$$(\alpha*n1*M)/Bs \in Z,$$

for n1 = 0,1,..., (Bs/M)-1 and therefore a value of $\alpha$ not having common factors with that of Bs/M be selected.

Therefore, the method according to the present invention consists in interleaving a bit flow, which is subdivided into bit blocks, in their turn diagonally subdivided into bit sub-blocks according to the formula:

$$i(B,j) = c(n,k),$$

where
   k = 0,1,...,Bs-1;
   n = 0,1,...,N,N+1,...;

$$B = B_0 + (M/2) * n + (k \bmod M);$$

$$j = 2 * (X \bmod (Bs/M)) + ((k \bmod M) \text{ div } (M/2));$$

$$X = \alpha*(k \text{ div } M) - \beta*(k \bmod M);$$

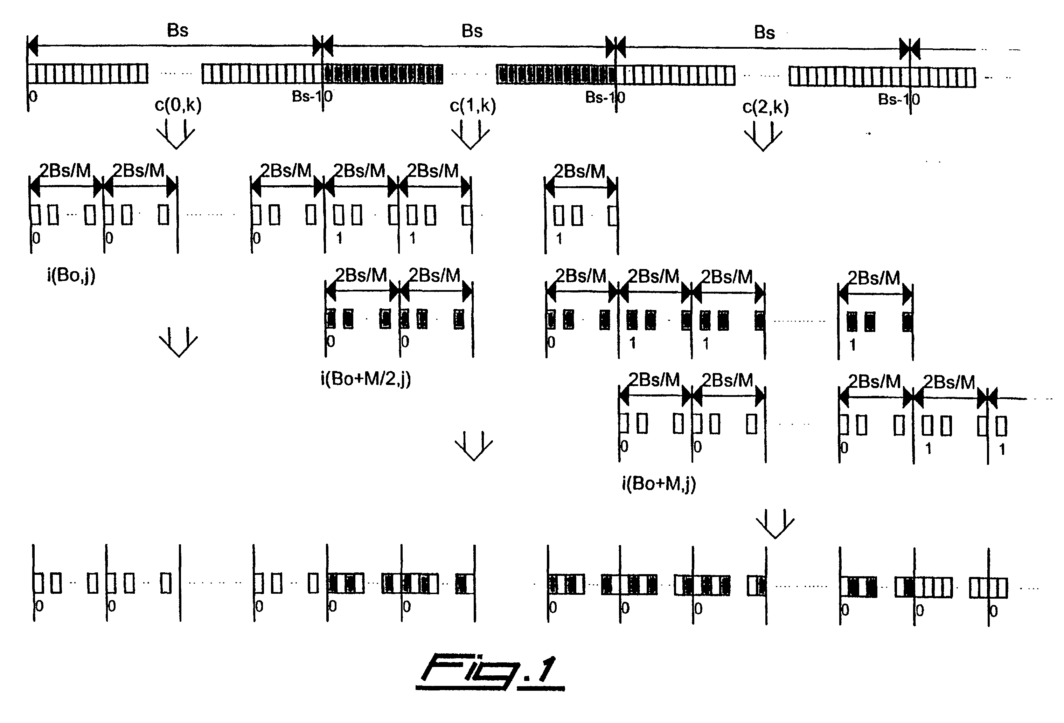

c(n,k) is the n-th block of the bit flow, i(B,j) is the B-th sub-block of interlaced bits, and $B_0$ is the first sub-block containing the bits coming from block c(0,k), that is the first block of the transmitted bits flow. In this way, as it is shown in figure 1, the Bs bits of the blocks c(0,k), c(1,k) and c(2,k) in input to the unit performing interleaving are distributed according to a two-step alternation technique. On top of the figure 1 we see that in the first step the bits of said blocks are mixed among each other in order to obtain M sub-blocks of Bs/M bits each. In the second step the bits of the last M/2 sub-blocks are alternated with the bits of the first M/2 sub-blocks obtained mixing among them the Bs bits of the next block, and so on. It is evident that in order to correctly implement the interleaving of bits, M must be an even positive number and Bs must be a positive number divisible by M.

More in detail, the result of the application of said formula is a distribution of the Bs bits of a generic block c (n,k) over M sub-blocks , using the positions having even indexes in the first M/2 sub-blocks and the positions having odd indexes in the last M/2 sub-blocks . The bits belonging to the next block c(n+1,k) employ the even numbered positions of the last M/2 sub-blocks obtained from the previous block and the odd numbered positions of the first M/2 sub-blocks obtained from the next block. In this way, each sub-block at the output of the interleaving unit contains Bs/M bits of data coming from the block c(n,k) and Bs/M bits coming from the next block c(n+1,k). The dimension of each sub-block i(B,j) is therefore (2 * Bs/M) bits.

In the lower part of the figure 1 we see that in the bit flow at the output of the interleaving unit, the sub-blocks having size Bs/M obtained from the blocks c(0,k), c(1,k) and c(2,k) are diagonally alternated with those coming from the next blocks, so that adjacent bits in the interlaced sequence of data at the output of the interleaving unit belong to different blocks.

In the present invention the factor X is not equal to (a * k) with a constant term, as in the known technique, but it is appropriately equal to:

$$(\alpha * (k\ div\ M) - \beta * (k\ mod\ M)),$$

where

$$(\alpha * n1 * M)/Bs \notin Z,$$

for n1 = 0,1,..., (Bs/M)-1.

In this way, the distribution of the bits of the block c(n,k) among the M sub-blocks is determined as in the known technique by the term (k mod M), therefore, all the bits having index k = x + n1 * M, with n1 = 0, 1,..., Bs/M - 1 in the block c(n,k) are inserted in the generic sub-block i(B + x,j), with x = 0, 1,..., M-1. Like it happens in the known technique, the result of the alternation method is a distribution of the Bs bits belonging to the block c(n,k) over M sub-blocks, employing the even index positions of the first M/2 sub-blocks and the odd index positions of the last M/2 sub-blocks .

However, compared to the known technique, the rule according to which the single bits are arranged inside each sub-block, substantially changes. In fact, the introduction of the parameters $\alpha$ and $\beta$ enables to separately control the dependence of j from the expression (k div M), thanks to the parameter $\alpha$, and from the expression (k mod M), thanks to the parameter $\beta$.

The parameter $\alpha$, which now has no more necessarily the value of M among its factors, allows to control the arrangement of the bits in a generic sub-block and therefore, indirectly, determines the value of the distance among said bits inside the sub-block itself. Moreover, the value of $\alpha$ affects also the distance at the output of the alternation unit among bits inserted in adjacent sub-blocks.

On the contrary, the parameter $\beta$ allows to obtain a shift in the insertion of the bits between adjacent sub-blocks. As we will see later on, this shift, occurring in circular way inside each sub-block, can become necessary in certain cases, to additionally distribute the bits on the frame of a mobile telephone system having intermittent transmission. If this shift is not necessary, it is sufficient to assume $\beta = 0$.

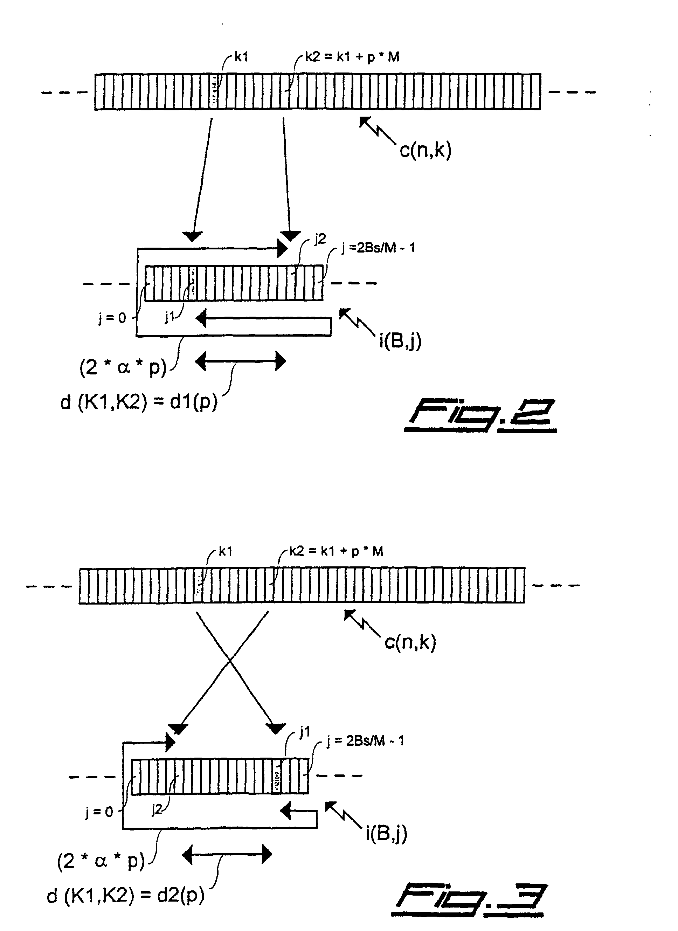

Now, with reference also to the figures 2 and 3, we see how the distance d(k1,k2) in terms of number of bits among the bits identified by indexes k1 and k2 in the generic block c(n,k) is calculated on the flow of data at the output of the interleaving unit.

If bits having index k1 and k2, with k1 < k2, are inserted in the same sub-block it results:
k1 mod M = k2 mod M; and

$$k2 = k1 + p * M, \qquad per\ p = 1,\ 2,...,(Bs/M)-1.$$

The corresponding positions inside the sub-block i(B,j) are given by the following formulas:

$$j1 = 2 * [(\alpha * (k1\ div\ M) - \beta * (k1\ mod\ M))\ mod\ (Bs/M)] + ((k1\ mod\ M)\ div$$

$$(M/2));$$

and

$$j2 = 2 * [(\alpha * (k1\ div\ M) + (\alpha * p) - \beta * (k1\ mod\ M))\ mod\ (Bs/M)] + ((k1\ mod$$

$$M)\ div\ (M/2)).$$

It is clear from these last two formulas that the value of j2 is obtained starting from the position identified by j1 and going forward by (2 * $\alpha$ * p) places in the direction of the increasing j indexes, in a circular way inside the sub-block. The distance d(k1,k2) can therefore assume the following values, irrespective of the $\beta$ value:

$$d1(p) = 2 *[(\alpha* p) \bmod (Bs/M)],$$

if j1 < j2;

$$d2(p) = 2 * (Bs/M) - 2[(\alpha* p) \bmod (Bs/M)],$$

if j1 > j2.

The calculation of the distance in the situations corresponding to these last two formulas is shown in figure 2 and 3, respectively.

On the contrary, if the bits having index k1 and k2, with k1 < k2, are inserted in adjacent sub-blocks, it results:

$$k2 \bmod M = k1 \bmod M+1;$$

and

$$k2 = k1 + (q * M)+1, \qquad \text{for } q = 0,1,...,(Bs/M)-1.$$

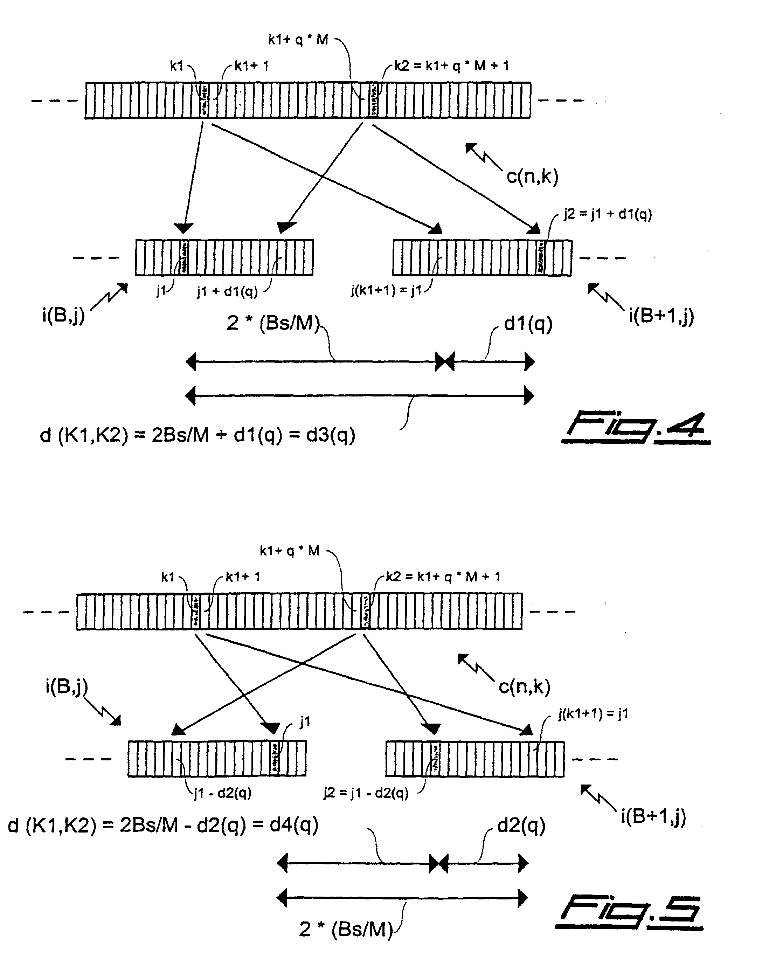

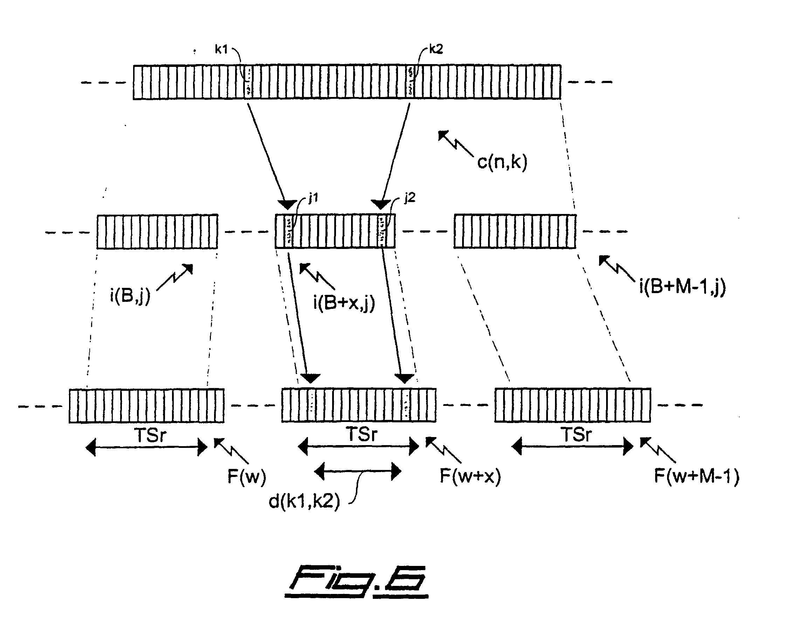

Assuming to consider $\beta = 0$, figures 4 and 5 highlight how the distance d(k1,k2) can assume the following values:

$$d3(q) = 2 * (Bs/M) + 2 * [(\alpha * q) \bmod (Bs/M)],$$

and

$$d4(q) = 2 * [(\alpha * q) \bmod (Bs/M)],$$

depending on the fact that the value of j corresponding to the index k1 is lower, as in figure 4, or higher, as in figure 5, than the value corresponding to the index k1 + (q * M). These last two formulas apply for $q \geq 1$, while for q = 0 the distance is given only by the first one of the two formulas. In the particular case in which the two sub-blocks considered are those of index (M/2) - 1 and M/2, the values given by these last two formulas must be increased by one unit due to the presence of the expression ((k mod M) div (M/2)).

If the parameter $\beta$ is different from zero, said distances shall be opportunely corrected; we shall describe in short how to solve the problem only through the use of the parameter a simply letting $\beta = 0$, also in the case in which the distance among bits inserted in adjacent sub-blocks has to be controlled.

If the bits having index k1 and k2 are inserted in non-adjacent sub-blocks, the distance d(k1,k2) is equal at least to 2Bs/M and therefore it can also go unchecked if we deem that the value of 2Bs/M is sufficiently high.

As previously described, the sub-blocks having Bs/M dimension obtained from a block c(n,k) are diagonally alternated with those coming from the next block c(n+1,k) in order that adjacent bits in the sequence of interleaved data belong to separate blocks. In this case, it is not necessary to control the original position of the bits resulting adjacent at the output of the interleaving unit, since said bits come from two different coding processes and therefore will be decoded in two different phases during reception.

The distances d1(p), d2,(p), d3(q) and d4(q) expressed in the formulas described above are functions of the parameters $\alpha$ and $\beta$ appearing in the alternation method according to the present invention. The selection of the parameters $\alpha$ and $\beta$ shall be made in order to maximize said distances corresponding to appropriate values of p and q.

To better describe the use of the alternation method according to the present invention, it is worth identifying two types of mobile telephone systems.

The first type of system is characterized by a subdivision of the time axis in time intervals, known as time slots. Each user employs a well-defined time slot cyclically repeating on the time axis in a given period called frame, for the transmission of its information. This survey includes the systems employing TDMA access techniques, among which the GSM system itself and those employing TD-CDMA techniques, such as for instance the TDD-UTRA system.

The second type includes on the contrary, the mobile telephone systems characterized by a continuous transmission on the time axis, such as for instance the FDD-UTRA system.

Making reference to the figure 6, we see that, in a system of the first type, the sub-blocks i(B+x,j), with x = 0, 1,..., M-1, obtained through the alternation method according to the present invention are inserted in a given time slot TS inside consecutive frames F(w), F(w+1) and F(w+2). Therefore, the positions occupied by said sub-blocks on the time axis are sufficiently distant among each other, since their distance is equal to the frame time, and in the selection of the parameters characterizing the interleaving, we can limit our consideration to the distance among bits inserted in the same sub-block. Therefore, the value of parameter β can be let at zero and the value to assign to the parameter p in the formula relevant to the distances d1(p) and d2(p) is the result of a compromise choice. If we want to control, and therefore maximize, the distance inside a generic sub-block among bits, which in the starting block c(n,k) are (P * M) positions far at most, it is necessary to consider these formulas corresponding to the values p = 1, 2,..., P and evaluate the $\alpha_{opt}$ value of $\alpha$ that, though meeting the condition

$$(\alpha * n1 * M)/Bs \in Z,$$

for n1 = 0,1,..., (Bs/M)-1, allows to maximize the following function:

$$D_{min}(\alpha) = min\{d1(1),d2(1),...d1(P),d2(P)\}.$$

In this case, in the data flow coming out from the interleaving unit, we shall have a distance equal to at least $D_{min}(\alpha_{opt})$ positions among all those bits having in the generic block c(n,k) a distance lower than or equal to ((P + 1) * M - 1) positions.

Of course, the minimum value of the distance $D_{min}(\alpha_{opt})$ that can be guaranteed decreases as the number of bits of which one wants to control the distance increases, that is, as P increases, since the number of the functions to be considered in the formula of $D_{min}(\alpha)$ is always higher.

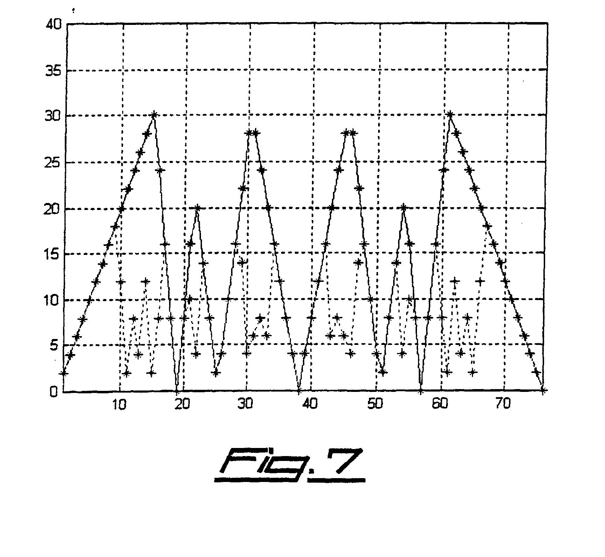

For instance, figure 7 shows the trends of the $D_{min}(\alpha)$ function for the value Bs = 608, M=8 and two different values of P, particularly P = 4 (continuous line) and P = 7 (dotted line). In this figure it can be noticed that the maximum of the $D_{min}$ function is reached corresponding to $\alpha$ = 15 and $\alpha$ = 9, respectively. Since there aren't common factors between these values and Bs/M = 76, that is the condition ($\alpha$ * n1 * M) / Bs $\notin$ Z, for n1 = 0, 1,..., (Bs/M) - 1 is satisfied, they represent also the corresponding values of $\alpha_{opt}$. The minimum guaranteed distance $D_{min}(\alpha_{opt})$ results equal to 30 for P = 4 and drops to 18 for P = 7. Since the bits, whose position is controlled, have among each other a distance in the block c(n,k) lower than or equal to ((P + 1) * M - 1), that is respectively lower than or equal to 39 and 63, the bits that at the output of the interleaving unit occupy adjacent positions having even or odd index have a distance in the original block equal at least to 40 and 64.

Therefore, corresponding to short lasting fading of the transmitted signal, it could be preferred a choice as P = 7 considering that adjacent bits having even or odd index in the flow of alternated bits result more distant in the block c(n,k). On the other hand, the choice P = 4 assures a higher distance on the transmitted flow among the bits whose position is controlled and therefore it could prove to be the best in presence of fading of the signal having longer duration. The value of P to be considered, is therefore the result of a compromise choice between the value of the minimum distance to be guaranteed and the number of bits the position of which has to be controlled. This compromise depends also on the characteristics of the used code for error correction.

In some cases, it can also happen that some positions, privileged in respect of other ones are present on the frame. Similar situations occur for instance when the format of a portion of the bit flow foresees the presence of a bit sequence (known in advance on the receiver side) used for the channel estimation, such as for instance the so-called midamble present in the frame of the GSM and TDD-UTRA systems. In a time-variant propagation channel as the mobile radio one, the bits placed close to said field are characterized by a lower error risk compared to distant ones, since they benefit by a better channel estimation. In this case, if β = 0 is simply taken, the bits placed in near positions in the generic block c(n,k), due to the same value of the corresponding index j, would be in the same positions inside the M sub-blocks obtained from said block and therefore in the same relative position, versus the sequence used for the channel estimation. Therefore, with β = 0, we would have some groups of bits, adjacent in the c(n,k) block, characterized by better conditions and other groups of bits, always adjacent in the block c(n,k), characterized by worse conditions. The use of the parameter β allows to overcome this problem introducing a shift of a number of positions equal to 2 * β in the insertion of bits between adjacent sub-blocks. The shift of the bits already arranged inside each sub-block on the basis of the value of the parameter $\alpha$ shall be made in circular way inside the same sub-block, therefore, we can realize how the use of a value β $\cong$ (Bs / M) / (M-1) enables to distribute the bits in the frame in the best way.

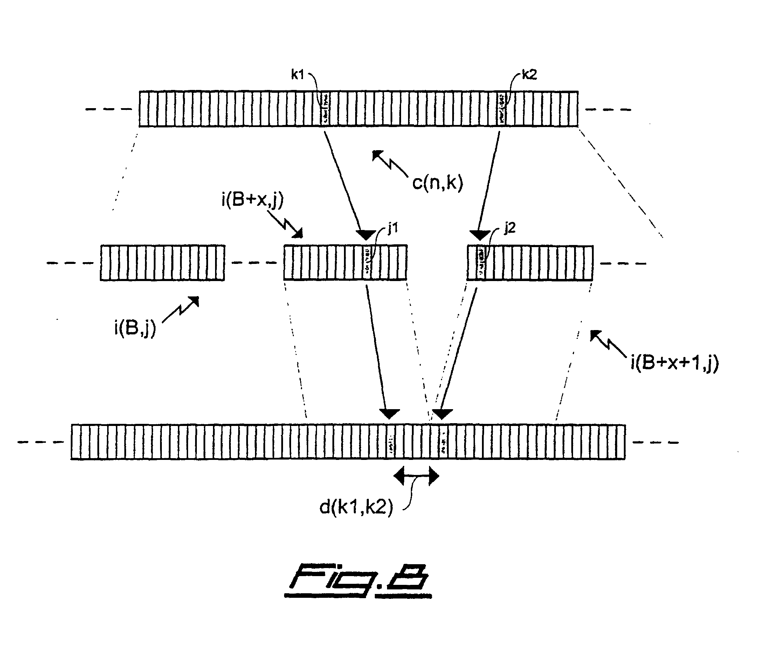

Making reference to the figure 8, we see that in the second type of system, when in presence of a transmission of the continuous type, it is necessary to control, in addition to the distances d1(p) and d2(p) among the bits inserted in the same sub-block, also the distances d3(q) and d4(q) existing among the bits inserted in adjacent sub-blocks, given that the latter are in consecutive positions on the frame. If one wants to control the distance existing at the output of the alternation unit among the bits having a distance lower than L * M in input to the same, the function to be considered in the determination of the $\alpha_{opt}$ value is:

$$D_{min}(\alpha) = min \{\{d1(p)\}_{p=1,2,...P}, \{d2(p)\}_{p=1,2,...P}, \{d3(q)\}_{q=0,1,...Q}, \{d4(q)\}_{q=0,1,...Q}\},$$

where P and Q values have to be selected as follows:

$$P=Q=L-1.$$

Also in this case it is possible to obtain the control of the distances among the different bits only through the use of the parameter $\alpha$ and therefore letting $\beta = 0$. Once selected, on the basis of considerations on the maximum allowed delay, the value of Bs, and once determined the number M of sub-blocks to be used, that is the interleaving depth, the number of consecutive bits in input to the interleaving unit inside the generic block c(n,k), (and therefore the value of L) the distance of which in the interlaced bit flow has to be controlled and maximized must be selected.

Since in this last formula for $D_{min}(\alpha)$ calculation it is considered a higher number of distance functions compared with the previous one for $D_{min}(\alpha)$ calculation, the guaranteed value for the minimum distance $D_{min}(\alpha_{opt})$ will result lower.

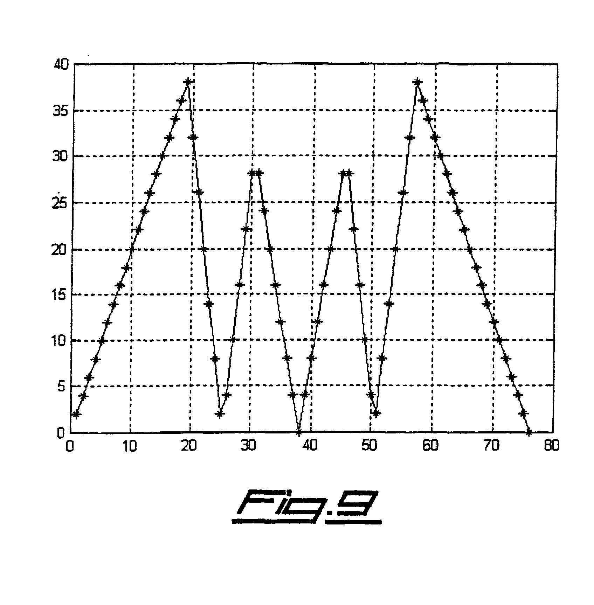

Figure 9 shows the trends of the $D_{min}(\alpha)$ function for Bs = 608, M = 8, P = Q = 3, from which it results that the best value of $\alpha$ is equal to 17 and the corresponding value of the minimum distance is equal to 3. In fact, though for $\alpha = 19$ and $\alpha = 18$ the value of $D_{min}$ is higher, said values cannot be accepted since they transgress the formula ($\alpha$ * n1 * M) / Bs $\notin Z$, for n1 = 0, 1,..., (Bs/M) - 1. Finally, it is obvious that in the receiving unit of the mobile telephone system including the method according to present invention the original bit flow is reconstructed performing the operating phases described above in the reverse way.

Possible other embodiments and/or additions may be made by those skilled in the art to the invention here described and shown, without departing from the scope thereof.

## Claims

1. Method for interleaving a bit flow in a mobile telephone system, said flow being divided into bit blocks, in their turn diagonally subdivided into bit sub-blocks according to the formula:

$$i(B,j) = c(n,k),$$

in which
    k = 0,1,...,Bs-1;
    n = 0,1,...,N,N+1,...;
    B = $B_0$ + (M/2) * n + (k mod M);
    j = 2 * (X mod (Bs/M)) + ((k mod M) div M/2);
    c(n,k) is the n-th block of the bit flow, i(B,j) is the B-th sub-block of alternate bits, $B_0$ is the first sub-block containing the bits coming from the first block of said bit flow, M is an even positive number and Bs is a positive number divisible by M; the distance between the bits inside a sub-block is controlled through the variation of a first parameter $\alpha$, the shift in the insertion of bits between adjacent sub-blocks is controlled through a second parameter $\beta$, and X is an expression correlating said parameters $\alpha$ and $\beta$ through the formula:

$$X = (\alpha * (k \ div \ M) - \beta * (k \ mod \ M)),$$

in which

$$(\alpha*n1*M)/Bs \notin Z, \qquad \text{per n1} = 0,1,..., (Bs/M)-1.$$

2. Method according to the previous claim, **characterized in that** said parameter $\alpha$ is equal to a value $\alpha_{opt}$ maximizing the value of the function:

$$D_{min}(\alpha) = \min\{d1(1),d2(1),...d1(P),d2(P)\},$$

in which:

d(k1,k2) is the distance in terms of bit number calculated on the interlaced flow between two bits identified by indexes k1 and k2, with k1 < k2, in a block c(n,k);
j1 and j2 are the positions of these two bits in a sub-block i(B,j);
p is a parameter having value included between 1 and a maximum P value selected according to the number of bits, equal to ((P + 1) * M - 1), placed in adjacent positions in the starting bit flow, of which one wants to control and maximize the distance in the interlaced bit flow.

$$d1(p) = 2 * [(\alpha* p) \bmod (Bs/M)],$$

if j1 < j2; and

$$d2(p) = 2 * (Bs/M) - 2[(\alpha*p) \bmod (Bs/M)],$$

if j1 > j2.

3. Method according to claim 1, **characterized in that** said parameter $\alpha$ is equal to a value $\alpha_{opt}$ maximising the value of the function:

$$D_{min}(\alpha) = \min \{\{d1(p)\}_{p=1,2,...P}, \{d2(p)\}_{p=1,2,...P}, \{d3(q)\}_{q=0,1,...Q}, \{d4(q)\}_{q=0,1,...Q}\},$$

in which:

d(k1,k2) is the distance in terms of bit number calculated on the interlaced flow between two bits identified in a block c(n,k) through indexes k1 and k2, with k1 < k2;
j1 and j2 are the positions of these two bits inside two adjacent sub-blocks, i(B,j) and i(B+1,j);
p is a parameter having value between I and a maximum P value selected according to the number of bits, equal to ((P + 1) * M - 1), placed in adjacent positions in the starting bit flow, of which one wants to control and maximize the distance in the interlaced bit flow;
q is a parameter having value between 0 and a maximum value Q=P;

$$d1(p) = 2 * [(\alpha*p) \bmod (Bs/M)],$$

if j1 < j2;

$$d2(p) = 2 * (Bs/M) - 2[(\alpha * p) \bmod (Bs/M)],$$

if j1 > j2;

$$d3(q) = 2 * (Bs/M) + 2 * [(\alpha * q) \bmod (Bs/M)],$$

if j(k1) < j(k1 + q * M); and

$$d4(q) = 2 * [(\alpha * q) \bmod (Bs/M)]$$

if j(k1) > j(k1 + q* M).

**4.** Method according to one of the previous claims, **characterized in that** $\beta = 0$.

**5.** Method according to a claim 1 to 3, **characterized in that** $\beta \cong (Bs / M) / (M-1)$.

**Patentansprüche**

**1.** Verfahren zur Verschachtelung eines Bitstroms in einem Mobiltelefonsystem, wobei der besagte Strom in Bitblöcke unterteilt ist, die ihrerseits diagonal in Bitunterblöcke unterteilt sind, nach der Formel:

$$i(B,j) = c(n,k),$$

wobei
    k = 0, 1,...,Bs-1;
    n = 0,1,...,N,N+1,...;

$$B = B_0 + (M/2)*n+(k \bmod M);$$

$$j = 2 * (X \bmod (Bs/M)) + ((k \bmod M) \text{ div } M/2);$$

c(n,k) der n-te Block des Bitstroms ist, i(B,j) der B-te Unterblock von abwechselnd angeordneten Bits ist, $B_0$ der erste Unterblock ist, welcher die aus dem ersten Block des besagten Bitstroms stammenden Bits enthält, M eine positive gerade Zahl ist und Bs eine durch M teilbare positive Zahl ist; der Abstand zwischen den Bits innerhalb eines Unterblockes wird durch die Änderung eines ersten Parameters $\alpha$ gesteuert, die Verschiebung bei der Einfügung von Bits zwischen benachbarten Unterblöcken wird durch einen zweiten Parameter $\beta$ gesteuert, und X ist ein Ausdruck, welcher die besagten Parameter $\alpha$ und $\beta$ über die folgende Formel verknüpft:

$$X = (\alpha*(k \text{ div } M) - \beta*(k \bmod M)),$$

wobei

$$(\alpha*n1*M)/Bs \notin Z,$$

für n1 =0,1,..., (Bs/M) -1.

**2.** Verfahren nach dem vorhergehenden Anspruch, **dadurch gekennzeichnet, dass** der besagte Parameter $\alpha$ gleich einem Wert $\alpha_{opt}$ ist, welcher den Wert der Funktion $D_{min}(\alpha) = \min\{d1(1),d2(1),...d1(P),d2(P)\}$ maximiert, wobei:

d(k1,k2) der über die Anzahl der Bits ausgedrückte, im verschachtelten Strom berechnete Abstand zwischen zwei Bits ist, die in einem Block c(n,k) mit den Indizes k1 und k2, mit k1 < k2, versehen sind;
j1 und j2 die Positionen dieser zwei Bits in einem Unterblock i(B,j) sind;
p ein Parameter mit einem Wert zwischen 1 und einem maximalen Wert P ist, der entsprechend der Anzahl von im Anfangs-Bitstrom in benachbarten Positionen angeordneten Bits, die gleich ((P + 1) * M - 1) ist, gewählt wird, deren Abstand im verschachtelten Bitstrom man steuern und maximieren möchte;

$$d1(p) = 2 * [(\alpha* p) \bmod (Bs/M)],$$

falls j1 < j2; und

$$d2(p) = 2 * (Bs/M) - 2[(\alpha * p) \bmod (Bs/M)],$$

falls j1 > j2.

**3.** Verfahren nach Anspruch 1, **dadurch gekennzeichnet, dass** der besagte Parameter $\alpha$ gleich einem Wert $\alpha_{opt}$ ist, welcher den Wert der Funktion

$$D_{min}(\alpha) = min \{\{d1(p)\}_{p=1,2,...P}, \{d2(p)\}_{p=1,2,...P}, \{d3(q)\}_{q=0,1,...Q}, \{d4(q)\}_{q=0,1,...Q}\}$$

maximiert, wobei:

d(k1,k2) der über die Anzahl der Bits ausgedrückte, im verschachtelten Strom berechnete Abstand zwischen zwei Bits ist, die in einem Block c(n,k) mit den Indizes k1 und k2, mit k1 < k2, versehen sind;
j1 und j2 die Positionen dieser zwei Bits innerhalb von zwei benachbarten Unterblöcken, i(B,j) und i(B+1,j), sind;
p ein Parameter mit einem Wert zwischen 1 und einem maximalen Wert P ist, der entsprechend der Anzahl von im Anfangs-Bitstrom in benachbarten Positionen angeordneten Bits, die gleich ((P + 1) * M - 1) ist, gewählt wird, deren Abstand im verschachtelten Bitstrom man steuern und maximieren möchte;
q ein Parameter mit einem Wert zwischen 0 und einem maximalen Wert Q=P ist;

$$d1(p) = 2 * [(\alpha * p) \bmod (Bs/M)],$$

falls j1 < j2;

$$d2(p) = 2 * (Bs/M) - 2[(\alpha * p) \bmod (Bs/M)],$$

falls j1 > j2;

$$d3(q) = 2 * (Bs/M) + 2 * [(\alpha * q) \bmod (Bs/M)],$$

falls j(k1) < j(k1 + q * M); und

$$d4(q) = 2 * [(\alpha * q) \bmod (Bs/M)]$$

falls j(k1) > j(k1 + q * M).

**4.** Verfahren nach einem der vorhergehenden Ansprüche, **dadurch gekennzeichnet, dass** $\beta = 0$ ist.

**5.** Verfahren nach einem der Ansprüche 1 bis 3, **dadurch gekennzeichnet, dass** $\beta \cong (Bs/M)/(M-1)$ ist.

**Revendications**

**1.** Procédé d'entrelacement d'un flux binaire dans un système téléphonique mobile, ledit flux étant divisé en blocs de bits eux-mêmes subdivisés diagonalement en sous-blocs de bits selon la formule :

$$i(B,j) = c(n,k),$$

dans laquelle :
k = 0,1,...,Bs-1;

$$n = 0,1,...,N,N+1,...;$$

$$B = B_0 + (M/2)^*n + (k \bmod M);$$

$$j = 2 * (X \bmod (Bs/M)) + ((k \bmod M) \text{ div } M/2) ;$$

$c(n,k)$ est le $n^{\text{ième}}$ bloc du flux binaire, $i(B,j)$ est le $B^{\text{ième}}$ sous-bloc de bits entrelacés, $B_0$ est le premier sous-bloc contenant les bits provenant du premier bloc dudit flux binaire, M est un nombre positif pair et Bs est un nombre positif divisible par M ; la distance entre les bits à l'intérieur d'un sous-bloc est contrôlée en faisant varier un premier paramètre $\alpha$, le décalage dans l'insertion de bits entre sous-blocs adjacents est contrôlé au moyen d'un second paramètre $\beta$ et X est une expression corrélant lesdits paramètres $\alpha$ et $\beta$ au moyen de la formule :

$$X = (\alpha * (k \text{ div } M) - \beta * (k \bmod M)),$$

dans laquelle :

$$(\alpha^*n1^*M)/Bs \notin Z,$$

pour n1 =0,1,..., (Bs/M)-1.

2. Procédé selon la revendication précédente, **caractérisé en ce que** ledit paramètre $\alpha$ est égal à une valeur $\alpha_{opt}$ maximalisant la valeur de la fonction :

$$D_{min}(\alpha) = \min\{d1(1),d2(1),...d1(P),d2(P)\},$$

dans laquelle :

d(k1,k2) est la distance, exprimée en nombre de bits et calculée sur le
flux entrelacé, entre deux bits identifiés par les indices k1 et k2, avec k1 < k2, dans un bloc c(n,k) ;
j1 et j2 sont les positions de ces deux bits dans un sous-bloc i(B,j) ;
p est un paramètre de valeur comprise entre 1 et une valeur P maximale sélectionnée en fonction du nombre de bits, égal à ((P + 1) * M - 1), placés dans des positions adjacentes dans le flux binaire de départ, dont on veut contrôler et maximaliser la distance dans le flux binaire entrelacé ;

$$d1(p) = 2 * [(\alpha^* p) \bmod (Bs/M)],$$

si j1 < j2, et

$$d2(p) = 2 * (Bs/M) - 2[(\alpha^* p) \bmod (Bs/M)],$$

si j1 > j2.

3. Procédé selon la revendication 1, **caractérisé en ce que** ledit paramètre $\alpha$ est égal à une valeur $\alpha_{opt}$ maximalisant la valeur de la fonction :

$$D_{min}(\alpha) = \min \{\{d1(p)\}_{p=1,2,...P},\{d2(p)\}_{p=1,2,...P},\{d3(q)\}_{q=0,1,...Q},\{d4(q)\}_{q=0,1,...Q}\},$$

dans laquelle :
d(k1,k2) est la distance, exprimée en nombre de bits et calculée sur le flux entrelacé, entre deux bits identifiés dans un bloc c(n,k) par les indices k1 et k2, avec k1 < k2 ;

j1 et j2 sont les positions de ces deux bits à l'intérieur de deux sous-blocs adjacents, i(B,j) et i(B+1,j);

p est un paramètre de valeur comprise entre 1 et une valeur P maximale sélectionnée en fonction du nombre de bits, égal à ((P + 1) * M - 1), placés dans des positions adjacentes dans le flux binaire de départ, dont on veut contrôler et maximaliser la distance dans le flux binaire entrelacé ;

q est un paramètre de valeur comprise entre 0 et une valeur maximale Q=P;

$$d1(p) = 2 *[(\alpha* p) \bmod (Bs/M)],$$

si j1 < j2 ;

$$d2(p) = 2 * (Bs/M) - 2[(\alpha* p) \bmod (Bs/M)],$$

si j 1 > j2 ;

$$d3(q) = 2 * (Bs/M) + 2 * [(\alpha* q) \bmod (Bs/M)],$$

si j(k1) < j(k1 + q * M), et

$$d4(q) = 2 * [(\alpha* q) \bmod (Bs/M)]$$

si j(k1) > j(k1 + q * M).

4. Procédé selon l'une quelconque des revendications précédentes, **caractérisé en ce que** $\beta = 0$.

5. Procédé selon l'une quelconque des revendications 1 à 3, **caractérisé en ce que** $\beta \cong (Bs/M)/(M-1)$.

EP 1 247 366 B1

Bs     Bs     Bs

0   Bs-10   Bs-10   Bs-10

c(0,k)     c(1,k)     c(2,k)

2Bs/M   2Bs/M    2Bs/M   2Bs/M   2Bs/M    2Bs/M

0   0    0   1   1    1

$i(Bo,j)$

2Bs/M   2Bs/M    2Bs/M   2Bs/M   2Bs/M    2Bs/M

0   0    0   1   1    1

$i(Bo+M/2,j)$

2Bs/M   2Bs/M    2Bs/M   2Bs/M

0   0    0   1   1

$i(Bo+M,j)$

0    0    0    0    0    0    0

Fig.1

*Fig.2*

*Fig.3*

$$d (K1,K2) = 2Bs/M + d1(q) = d3(q)$$

Fig.4

$$d (K1,K2) = 2Bs/M - d2(q) = d4(q)$$

Fig.5

k1    k2

c(n,k)

j1    j2

i(B,j)

i(B+x,j)

i(B+M-1,j)

TSr    TSr    TSr

F(w)    F(w+x)    F(w+M-1)

d(k1,k2)

Fig.6

Fig.7

Fig.8

*Fig.9*